# EUROPÄISCHE PATENTSCHRIFT

(11) **EP 1 294 586 B1**
(45) Veröffentlichungstag und Bekanntmachung des Hinweises auf die Patenterteilung: **27.09.2006**
(21) Anmeldenummer: 01942873.9
(22) Anmeldetag: 28.06.2001
(51) Int. Cl.: B60J 5/04

(54) **KRAFTFAHRZEUGTÜR MIT INSASSENSCHUTZ**
MOTOR VEHICLE DOOR WITH A PASSENGER PROTECTION SYSTEM
PORTE DE VEHICULE AUTOMOBILE MUNIE D'UNE PROTECTION POUR LES PASSAGERS

(30) Priorität: 28.06.2000 AT 4782000 U
(43) Veröffentlichungstag der Anmeldung: 26.03.2003
(73) Patentinhaber: Magna Steyr Fahrzeugtechnik AG & Co KG, 8041 Graz (AT)
(72) Erfinder: ORNIG, Adolf, A-8141 Unterpremstetten (AT); GRAUPP, Martin, A-8020 Graz (AT); BINDAR, Gernot, A-8042 Graz (AT); DIETZ, Wolfgang, A-8010 Graz (AT); PAIER, Gabriela, A-8010 Graz (AT)
(74) Vertreter: Kovac, Werner
(86) Internationale Anmeldenummer: PCT/AT2001/000213
(87) Internationale Veröffentlichungsnummer: WO 2002/000461

(56) Entgegenhaltungen:
- EP-A- 0 952 019
- DE-A- 3 217 640
- DE-A- 19 809 750
- DE-A- 19 941 192

## Beschreibung

Die Erfindung handelt von einer Kraftfahrzeugtür, bestehend aus einem Türinnenteil, einem Türaussenteil und einer Trägerplatte, welche dicht mit dem Türinnenteil verbunden ist. Üblicherweise sind Türinnenteil und Türaussenteil Blechschalen, die auch den Fensterrahmen bilden und an denen die Scharniere, das Türschloss und gegebenenfalls ein Türstopper angebracht sind; die Trägerplatte trägt die diversen Aggregate, wie Fensterführungen und Fensterheber und hat neuerdings auch die Aufgabe, die Insassen bei seitlichen und frontalen Kollisionen zu schützen. Die einschlägigen Vorschriften werden immer strenger. Damit steigen einerseits die Sicherheitsanforderungen, andererseits müssen die Herstellungskosten sinken.

Aus der DE 198 09 750 A1 ist eine Kraftfahrzeugtür bekannt, bei der zwischen den beiden Blechschalen eine sehr steife Trägerplatte eingespannt ist. Diese bietet zwar bei seitlicher Kollision einen sehr guten Schutz gegen Penetration, durch deren geringe Dehnung sind jedoch die Verformungswege zu klein für eine wirksame Verzögerung. Die Einspannung zwischen den beiden Blechschalen in der Ebene der Trägerplatte erlaubt keine wirksame Abdichtung zwischen dem Aussenraum der Tür, in dem das Fenster geführt ist, und dem Innenraum, in dem die Elektrik untergebracht ist. Die beiden Blechschalen sind sperrige und komplexe Stanzteile, deren passgenaues Zusammenfügen bei der Montage schwierig ist. Eine so aufgebaute Tür ist immer noch schwer und nicht für verschiedene Fahrzeugvarianten (zum Beispiel Coupé und Cabriolet) verwendbar. Gerade das ist aber zur Kostensenkung erwünscht.

Aus der DE 197 44 810 A1 ist eine Kraftfahrzeugtür bekannt, bei der ein Rahmenmodul in einen aus zwei Blechschalen bestehenden Türkasten von oben einsenkbar ist. Der Rahmenmodul hat unter der Fensteröffnung einen Modulträger, der eine Sperrschicht bildet und diverse Aggregate trägt. Auf diese Weise wird eine begrenzte Modularität der Tür erreicht, weil der Türkasten nur die Grundtür unter dem Fenster bildet, eine fühlbar Gewichtsverminderung oder weitere Kostensenkung aber nicht.

Bei der aus der Praxis bekannten Tür des "SMART" sind an einem inneren Trägergerüst aus Leichtmetallprofilen Scharniere, das Schloss, die Führungen rahmenloser Fenster, diverse Aggregate und eine Innenverkleidung angebracht. Die Aussenhaut ist auf das Trägergerüst nur aufgeschoben. Diese Konstruktion ist zwar leicht, kann jedoch für Fahrzeuge normaler Dimension hinsichtlich Insassenschutz nicht befriedigen. Ausserdem ist die Aussenhaut von aussen leicht abnehmbar, eine Einladung für Diebe.

Es ist daher Ziel der Erfindung, eine Türkonstruktion vorzuschlagen, die hinsichtlich Sicherheit, Schutz der Insassen, Gewicht und Kosten bekannte Konstruktionen erheblich übertrifft. Die Senkung der Kosten erfordert möglichst weitgehende Modularisierung, das heisst, die Grundelemente Trägerplatte, Innenverkleidung und Aussenhaut müssen in verschiedenen Varianten miteinander kombinierbar sein.

Erfindungsgemäß wird das durch die kennzeichnenden Merkmale des Hauptanspruches eneicht. Die Trägerplatte aus einem verstärkten Kunststoff ist ein vollflächiger Strukturteil, der allen statischen und dynamischen Lastfällen, wie Frontalkollision, Seitenkollision, quasistatische Türeindrückung, Türabsenkung und Türüberdrückung genügt. Sie dient auch als Träger für alle Türaggregate und die Türverkleidung. Wegen der dichten Befestigung dient sie auch als Trennung von Feuchtzone und Trockenzone, wobei das Fenster an der Aussenseite der Trägerplatte in der Feuchtzone liegt. Die vollflächige Trägerplatte kann bei entsprechender Werkstoffauswahl auch als beschusssichere Panzerung dienen.

Die Verbindung des Randes der Trägerplatte in ihrer Ebene mit einem ersten und einem zweiten Zargenblech kann geschraubt oder genietet sein, sie gestattet einen Toleranzausgleich, welcher die Montage erleichtert und die Passgenauigkeit der fertigen Tür verbessert. Weil die Zargenbleche gefaltete Profile sind, können sie sich im Kollisionsfall verformen und kompensieren so den kleinen Verformungsweg der steifen Trägerplatte. Dieser Effekt wird noch dadurch vergrössert, dass der erste parallele Schenkel des Profiles mit dem Rand der Trägerplatte verbunden ist und deren zweiter Schenkel quer zur Fläche der Tür gerichtet ist und sich bei einer Kollision verformt.

Weil der Türinnenteil eine Schale aus Kunststoff ist, wird auch bei geringer Wandstärke eine funktionsgerechte Steifigkeit erzielt. Die Schale ist so tief, dass der Türinnenteil die Trägerplatte nach aussen überragt und einen Anschlussflansch bildet. Die Trägerplatte liegt im Inneren der Schale über die Zargenbleche ganz oder stellenweise an ersten Passflächen und direkt an einer zweiten Passfläche an und ist dort jeweils dicht befestigt. Die Befestigung erfolgt durch Schrauben oder Nieten, die auch wieder einen Toleranzausgleich gestatten. Die vollflächige Trägerplatte, die dicht mit dem aus Kunststoff bestehenden Türinnenteil verbunden ist, verschafft auch eine hörbar bessere Geräuschdämpfung.

Der Türaussenteil ist eine an dem Anschlussflansch formschlüssig befestigte Haut. Er kann aus einem beliebigen Werkstoff (Stahl, Leichtmetall oder Kunststoff) bestehen, weil er mit der metallischen Zarge nicht in Berührung kommt. So können keine elektrochemischen Reaktionen eintreten. Die form-schlüssige Verbindung ist nur bei geöffneter Tür zugänglich, also erhöhte Diebstahlsicherheit. Bei geöffneter Tür ist sie jedoch leicht auswechselbar, ein Vorteil bei kleineren Havarien oder für Individualisten, die andersfarbige Türen lieben. Die relativ flache Form der Aussenhaut bringt weiters einfache Her-stellung und freie Wahl des Werkstoffes.

Vorzugsweise ist das erste Zargenblech mit Scharnieren und das zweite Zargenblech mit einem Türschloss verbunden (Anspruch 2). So erfolgt die Krafteinleitung von der Trägerplatte direkt, ohne Belastung des Türinnenteiles, zu den Scharnieren beziehungsweise zum Schloss.

In Weiterbildung der Erfindung ist ein Kollisionsschutzträger vorgesehen, der mit seinen Enden am ersten und am zweiten Zargenblech ausserhalb der Trägerplatte befestigt ist (Anspruch 3). Weil ausserhalb der Trägerplatte, hat er so einen größeren Verformungsweg, noch bevor die Trägerplatte zur Wirkung kommt.

Vorzugsweise besitzt das Profil des ersten und zweiten Zargenbleches zumindest teilweise einen dritten Schenkel, der ungefähr parallel zum ersten Schenkel und ausserhalb dessen ist (Anspruch 4). Dieser dritte Schenkel versteift nicht nur das Zargenblech und vergrössert dessen Vermögen, Verformungsenergie aufzunehmen, es ist auch vorzusehen, dass an dem ihm der Kollisionsschutzträger befestigt ist (Anspruch 5). Die Befestigung am Zargenblech bringt wieder direkte Krafteinleitung in Schloss und Scharniere, wobei über das Zargenblech eine Interaktion zwischen Trägerplatte und Kollisionsschutzträger gegeben ist.

Ein weiterer Aspekt der Erfindung besteht darin, dass das erste und das zweite Zargenblech bis hin zum unteren Rand der Fensteröffnung reicht, und dass ein getrennter Fensterrahmen am oberen Rand der Trägerplatte aufgesetzt und am ersten und dritten Schenkel des Profiles befestigt ist (Anspruch 6). Das bedeutet zunächst, dass die Tür sowohl mit als auch ohne Fensterrahmen (als rahmenloses Fenster für Cabriolets) einsetzbar ist. Dabei gestattet das Aufsitzen auf der Trägerplatte und die einstellbare Verbindung mit der Zarge eine aus-reichend steife Befestigung und genaue Einstellung bei der Montage. Letzteres, weil der erste und der dritte Schenkel des Profiles parallel und in einigem Abstand voneinander sind. Das ist ein wesentlicher Schritt zur vollen Modularität.

Die Trägerplatte selbst kann im Rahmen der Erfindung sehr verschieden ausgebildet sein. In einer besonders geeigneten Ausführung besteht sie aus einer Innenwand und einer Aussenwand aus faserverstärktem Kunststoff, welche Wände zumindest entlang des Randes miteinander verbunden sind und wobei zwischen den Wänden Hohlräume vorgesesehen sind (Anspruch 7). Sie können auch zwischendurch durch nach innen gerichtete Rippen verbunden sein. Das ergibt höchste Steifigkeit bei geringstem Gewicht. An dem gemein-samen Rand greifen dann die Befestigungselemente an. So hat man eine vollflächige Trennwand zwischen Feucht- und Trockenzone. Dem wird kein Abbruch getan, wenn die Trägerplatte einen inneren Rand bildenden Durchbruch aufweist, an welchem die Wände miteinander verbunden sind (Anspruch 8). Im Gegenteil: wenn in diesem Durchbruch der Fensterhebermotor untergebracht und mit dem inneren Rand dicht verbunden ist, liegt seine Elektrik in der Trockenzone - dadurch findet man mit gewöhnlichen Steckern das Auslangen - und sein Abtrieb in der Feuchtzone, in der auch das Fenster ist.

In einer vorteilhaften Weiterbildung der Erfindung weist die Trägerplatte integrierte metallische Einsätze für Befestigungsmittel auf (Anspruch 9). Diese können eingeformte Metallteile, insbesondere Gewindebüchsen sein, und können sowohl die Befestigungsmittel für die Zargenbleche als auch die für diverse weitere Aggregate aufnehmen, etwa die Fensterführungen an der dem Türaussenteil zugewandten Seite (Anspruch 10).

Ein weiterer Schritt zur Herstellung voller Modularität besteht darin, dass der Türinnenteil an seiner dem Fahrzeuginneren zugekehrten Fläche Einsätze oder Durchbrechungen für die Anbringung von Einsatzteilen oder Verkleidungsteilen aufweist (Anspruch 11). Diese können dann in verschiedenen Ausstat-tungsvarianten, Farben oder Qualitäten beliebig eingesetzt werden. Die Durchbrechungen können im Extremfall so groß sein, dass der Türinnenteil nur mehr einen Rahmen bildet, in den dann eine ganze Türinnenverkleidung komplett mit Lautsprechern und anderem eingesetzt werden.

In einer bevorzugten Weiterbildung weist der Türinnenteil an seinem oberen Rand eine Fensterdichtung und Steckelemente auf, mit denen er auf die Trägerplatte vertikal aufgesteckt ist (Anspruch 12). Damit reicht der Türinnenteil bis an die Fensterscheibe heran, ist sicher befestigt und doch leicht montierbar.

In einer Weiterbildung weist der Türinnenteil eine umlaufende Gummidichtung aufweist, die an der Trägerplatte anliegt (Anspruch 13). Diese Massnahme kann bei besonders hohen Ansprüchen oder in komplizierteren Fällen die Abdichtung der Trockenzone verbessern und wirkt gleichzeitig geräuschisolierend. Hohe Ansprüche liegen etwa vor, wenn an der Innenseite des Türinnenteiles die Verkabelung vormontiert ist (Anspruch 14) und normale Leitungen und Stecker verwendet werden und lange aushalten sollen.

In Weiterbildung der Erfindung ist vorgesehen, dass der Türaussenteil an seinen drei mit dem Türinnenteil verbundenen Rändern einwärts gefaltete Zonen mit Löchern aufweist, an denen die formschlüssigen Befestigungsmittel durch Löcher im Anschlussflansch hindurch angreifen (Anspruch 15). Auf diese Weise ist die Verbindung nicht nur bei geschlossener Tür unzugänglich, sondern auch unsichtbar. Soll sie auch bei geöffneter Tür unsichtbar und zusätzlich vor Feuchtigkeit geschützt sein, so kann am Anschlussflansch am Türinnenteil eine Dichtlippe vorgesehen sein, die die formschlüssigen Befesti-gungsmittel an der dem Türaussenteil abgewandten Seite des Türinnenteiles überlappt (Anspruch 16). Schließlich kann der Türaussenteil an seinem oberen Rand eine Verstärkung und eine Fensterdichtung aufweisen (Anspruch 17).

Im folgenden wird die Erfindung anhand von Abbildungen beschrieben und erläutert. Es stellen dar:
- Fig. 1:: Schematische Aussenansicht einer erfindungsgemäßen Tür,
- Fig. 2:: Explosionszeichnung der Tür in Fig.1, Blatt A und Blatt B,
- Fig. 3:: Ansicht eines Teiles der erfindungsgemäßen Tür,
- Fig. 4:: Schnitt IV in Fig. 1,
- Fig. 5:: Schnitt V in Fig. 1,
- Fig. 6:: Schnitt VI in Fig. 1,
- Fig. 7:: Schnitt VII in Fig. 1,
- Fig. 8:: Schnitt VIII in Fig. 1,
- Fig. 9:: Schnitt IX in Fig. 1,
- Fig. 10:: Schnitt X in Fig. 1,

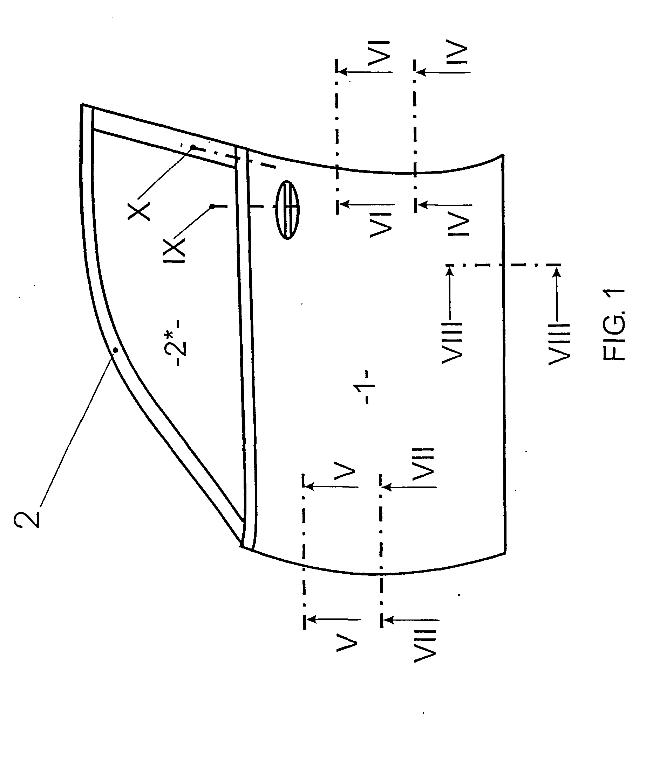

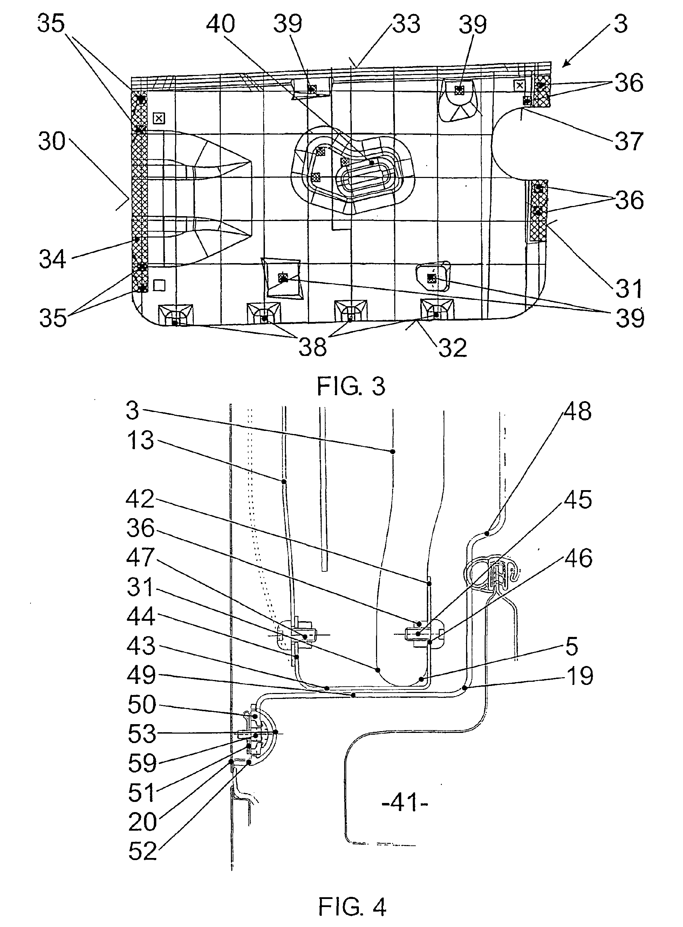

In Fig. 1 ist die Grundtür mit 1 bezeichnet, sie wird im Kontext der Erfindung auch Fläche der Tür genannt. Über dieser befindet sich ein Fensterrahmen 2, der die Fensterfläche 2* nach oben und seitlich begrenzt. Im übrigen dient die Fig. 1 vor allem dazu, die Lage der in Fig.4 bis Fig.10 dargestellten Schnitte anzugeben.

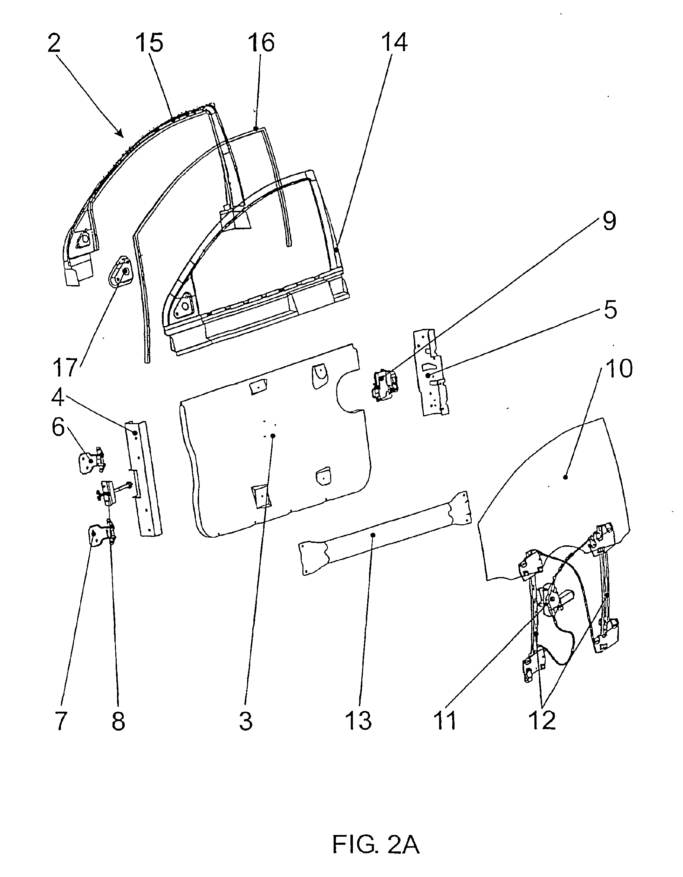

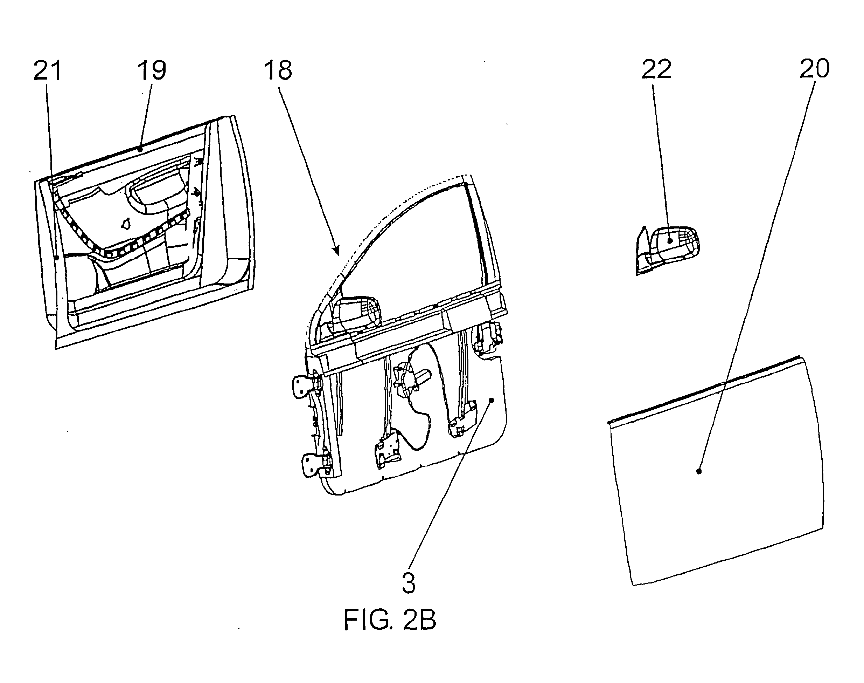

Fig. 2 zeigt die Bestandteile der erfindungsgemäßen Tür, verteilt auf zwei Blätter (A,B). Sie sind in der Reihenfolge ihrer Montage erwähnt. In Fig. 2A ist eine Trägerplatte mit 3 bezeichnet. Sie besteht aus verstärktem Kunststoff, erstreckt sich im wesentlichen über die Fläche der Grundtür 1 und ist so ausgebildet und dimensioniert, dass sie allen statischen und dynamischen Krafteinwirkungen standhält. Sie ist an ihrem vertikalen vorderen Teil des Randes mit einem ersten Zargenblech 4 und an ihrem hinteren Teil des Randes mit einem zweiten Zargenblech 5 fest, aber lösbar verbunden. Am ersten Zargenblech sind Scharniere 6, 7 und dazwischen ein Türstopper 8 angeschraubt; am zweiten Zargenblech 5 ein Türschloss 9. An der in der Figur sichtbaren Aussenseite der Trägerplatte 3 wird ein Fenster 10 mit Fensterheber 10, Fensterhebermotor 11 und Fensterführungen mit Befestigungssockeln 12 angeschraubt. Sodann wird an der der Trägerplatte 3 abgewandten Seite des Fensters 10 ein Kollisionsschutzträger 13 angebracht und mit den Zargenblechen 4, 5 verschraubt.

Der Fensterrahmen 2 besteht aus einem äußeren Fensterrahmen 14, einem inneren Fensterrahmen 15, einer Fensterdichtung 16 und einem Spiegelträger 17. Diese Teile werden miteinander verbunden, auf die Trägerplatte 3 aufgesetzt und mit den Zargenblechen 4,5 in noch zu beschreibender Weise verbunden.

In Fig. 2B ist die so komplett bestückte Trägerplatte 18 dargestellt. Sie wird nun in einen Türinnenteil 19 eingesetzt und mit diesem verbunden. Der Türinnenteil 19 ist schalenförmig ausgebildet, die Ränder der Schale überragen die Trägerplatte 3 nach aussen und enden in einem allgemein mit 21 bezeichneten Anschlußflansch, an dem dann von aussen der Türaussenteil 20 befestigt wird. Durch die dichte Verbindung zwischen Trägerplatte 3 und Türinnenteil wird zwischen beiden ein trockener Raum geschaffen. Der Raum zwischen der Trägerplatte 3 und dem Türaussenteil 20 ist ein feuchter Raum. Schließlich wird noch der Aussenspiegel 22 montiert.

Fig. 3 zeigt eine Ansicht der Trägerplatte 3 von der Fahrzeugaussenseite. Sie besteht aus einer Innenwand und einer Aussenwand aus faserverstärktem Kunststoff, welche Wände zumindest entlang des Randes miteinander verbunden sind und zwischen denen sich Hohlräume befinden. Das ist in Fig.3 nicht zu sehen, diesbezüglich wird auf die DE 198 09 750 A 1 der gleichen Anmelderin verwiesen. Die Trägerplatte 3 hat einen vorderen vertikalen Rand 30, einen hinteren vertikalen Rand 31, einen unteren Rand 32 und einen oberen Rand 33. Am vorderen Rand 30 ist eine Auflage 34 (gekreuzt schraffiert) für das erste Zargenblech 4 mit metallischen Einsätzen 35 für deren Befestigung vorgesehen. Am hinteren Rand 31 sind eine Auflage für das zweite Zargenblech 5 (gekreuzt schraffiert) und Einsätze 36 für deren Befestigung vorgesehen. Weiters ist in dem hinteren Rand 31 ein Ausschnitt 37 zu erkennen, der Raum für das Türschloss 9 schafft. Am unteren Rand 32 sind Einsätze 38 für die Verbindung mit dem Türinnenteil 19. Weitere Einsätze 39 sind für die Befestigung der Sockel der Fensterführung 12. Ungefähr in der Mitte der Trägerplatte 3 ist ein Durchbruch 40 vorgesehen, an welchem die beiden Wände der Trägerplatte 3 miteinander verbunden sind und einen inneren Rand bilden, an dem der Fensterhebermotor 11 befestigt ist. Auf diese Weise wird der Durchbruch 40 vom Fensterhebermotor 11 abgedichtet, gestattet aber die Energiezufuhr zu diesem aus dem an der Innenseite der Trägerplatte 3 gebildeten Trockenraum.

Fig. 4 zeigt in einem horizontalen Schnitt die Verbindung des hinteren Randes 31 der Trägerplatte 3 mit dem zweiten Zargenblech 5. Zur Orientierung ist die B-Säule 41 angedeutet. Der Querschnitt des zweiten Zargenbleches 5 besteht aus einem ersten Schenkel 42, einem zweiten Schenkel 43 und einem dritten Schenkel 44. Der erste Schenkel 42 ist mit der Trägerplatte 3 verbunden. Das geschieht mittels Bolzen 45, die in die Einsätze 36 in der Trägerplatte 3 eingeschraubt sind. Zum Toleranzausgleich ist der Durchmesser der Löcher 46 im ersten Schenkel 42 größer als der des Bolzens 45. Der Türinnenteil 19 besteht aus einem im wesentlichen ebenen fahrzeuginneren Wandteil 48, der gegebenenfalls durchbrochen ist (nicht dargestellt), und einer Schalenwand 49, die parallel zum zweiten Schenkel 43 verlauft, ohne diesen jedoch zu berühren. Der dritte Schenkel 44 ist ungefähr parallel dem ersten Schenkel 42, an ihm ist der Kollisionsschutzträger 13 mittels Bolzen 47 befestigt. Auch hier ist der anhand des Bolzens 45 beschriebene Toleranzausgleich vorgesehen.

Die Schalenwand 49 des Türinnenteiles 19 überragt die Trägerplatte 3 und das zweite Zargenblech 5 nach aussen und bildet einen Anschlußflansch 50, an dem der Türaussenteil 20 mittels formschlüssiger Befestigungsmittel 59 befestigt, zum Beispiel angeschraubt oder angeklipst. Damit diese Befestigung von der Fahrzeugaussenseite unsichtbar und unzugänglich ist, ist dort der Türaussenteil einwärts gefaltet und mit einem Einlegeblech 51 versehen. Wenn die Befestigung auch bei geöffneter Tür unsichtbar und geschützt sein soll, wird eine Dichtung 52 mit überlappender Dichtlippe 53 vorgesehen.

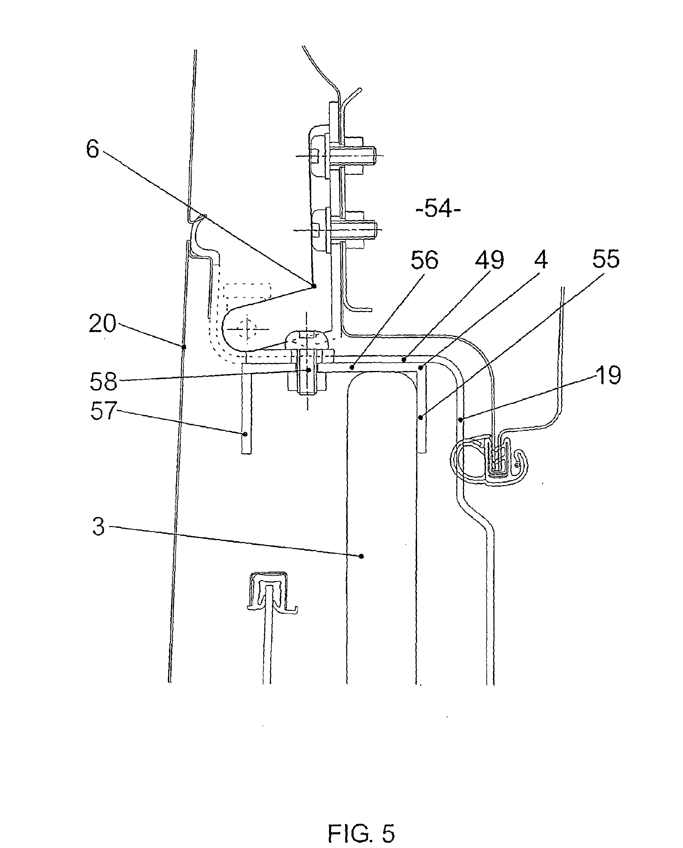

Fig. 5 ist ein horizontaler Schnitt in der Höhe des oberen Scharnieres 6. Das Profil des ersten Zargenbleches 4 besteht wieder aus einem ersten Schenkel 55, einem zweiten Schenkel 56 und einem dritten Schenkel 57. Am ersten (55) ist wieder in der anhand der Fig.4 beschriebenen Weise die Trägerplatte 3 befestigt, am zweiten (56) der Scharnier 6, wobei hier gleich die Schalenwand 49 des Türinnenteiles 19 mit eingespannt ist. Die Befestigung erfolgt mittels Bolzen 58, wieder mit dem beschriebenen Toleranzausgleich.

Zur Orientierung ist die A-Säule 54 mit der nicht eigens bezeichneten Türdichtung angedeutet.

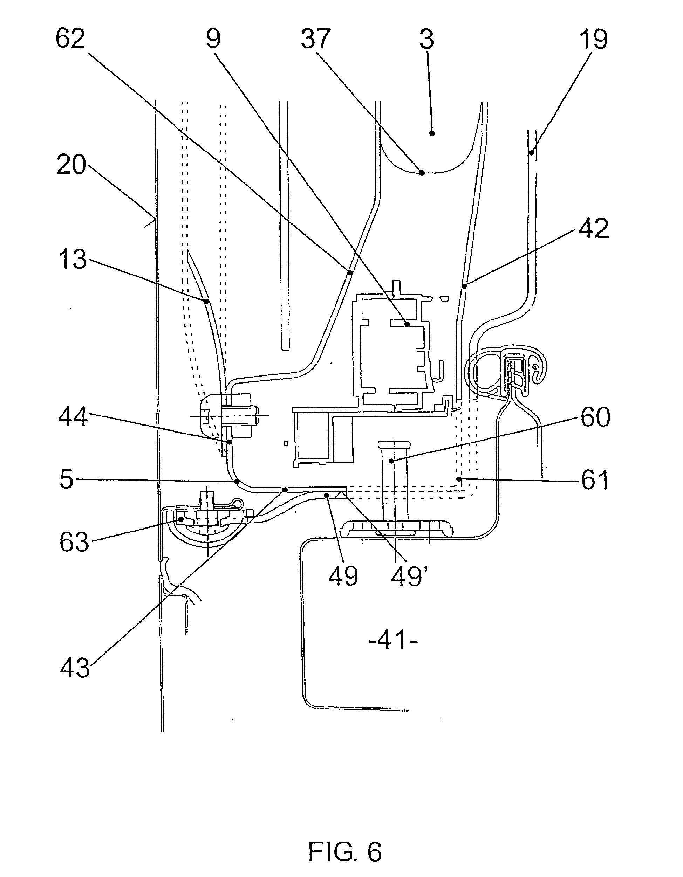

Fig. 6 ist der Horizontalschnitt im Bereich des Türschlosses am hinteren vertikalen Rand 31 der Tür. Wegen des Ausschnittes 37 in der Trägerplatte 3 ist der Querschnitt des zweiten Zargenbleches 5 in dieser Höhe verlängert. Der Ausschnitt 37 schafft Raum für das Türschloss 9, hier nur angedeutet, dass mit einem an der B-Säule 41 befestigten Schließzapfen 60 zusammenwirkt. Das Türschloss 9 ist an dem zweiten Zargenblech 5 angeschraubt, was in der Abbildung nicht zu sehen ist. Der zweite Schenkel 43 des zweiten Zargenbleches 5 ist in dieser Höhe mit der Schalenwand 49 des Türinnenteiles 19 verbunden und der dritte Schenkel 44 ist bis zur Trägerplatte 3 weitergeführt. Im Türinnenteil 19 und in den Schenkeln 42, 43 des Zargenbleches 5 ist ein Ausschnitt 61 für den Eintritt des Schließzapfens 60 vorgesehen. Der Schalenteil 49 bildet hier eine Passfläche 49' für das zweite Zargenblech 5. Am Rand des Schalenteiles 49 ist wieder ein Anschlußflansch 63 für die Befestigung des Türaussenteiles 20 vorgeshen. Dieser ist hier, abweichend von der Fig.4, normal und nicht parallel zur Fläche des Türaussenteiles angeordnet.

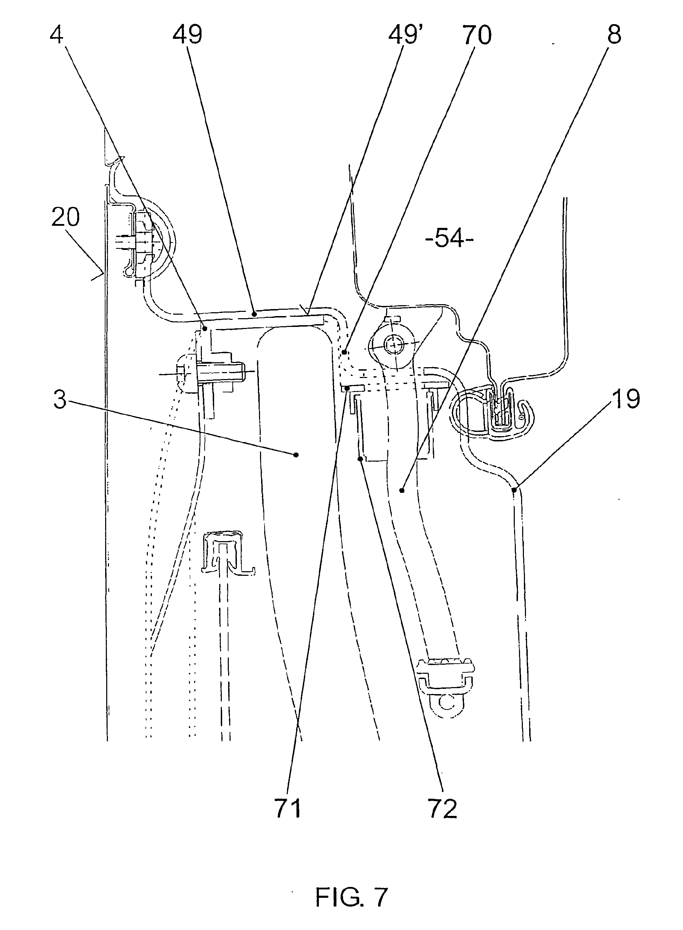

Fig. 7 ist ein horizontaler Schnitt in der Höhe des Türstoppers 8. Er unterscheidet sich von dem der Fig.5 dadurch, dass wegen des Türstoppers 8 der Türinnenteil 19 eine Durchbrechung 70 und das erste Zargenblech 4 einen einwärts gefalteten Teil 71 mit einer Ausstanzung aufweist, an dem der Anschlag 72 für den Türstopper 8 befestigt ist.

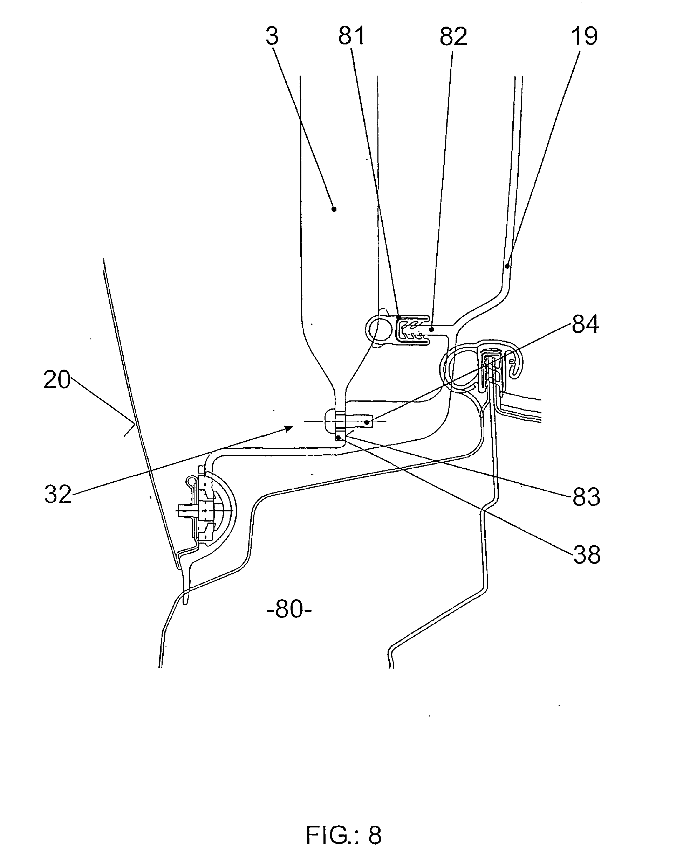

Fig. 8 ist ein vertikaler Schnitt in der Zone des unteren Randes 32 der Trägerplatte 3 und eines Türschwellers 80. Der Türinnenteil 19 hat hier eine Dichtrippe 82, auf die eine Gummidichtung 81 aufgesteckt ist. Diese kann zur besseren Abdichtung des Trockenraumes vorgesehen sein und entlang einer beliebigen geschlossenen Linie an der Trägerplatte 3 anliegen. Die Trägerplatte 3 ist an einer zweiten Passfläche 83 mittels Bolzen 84 angeschraubt. An der 3 sind an deren unterem Rand 32 wieder Aufnahmen 38 eingelassen. Deren Innendurchmesser kann zwecks Toleranzausgleich bei der Montage wieder größer als der Durchmesser des Bolzens 84 sein.

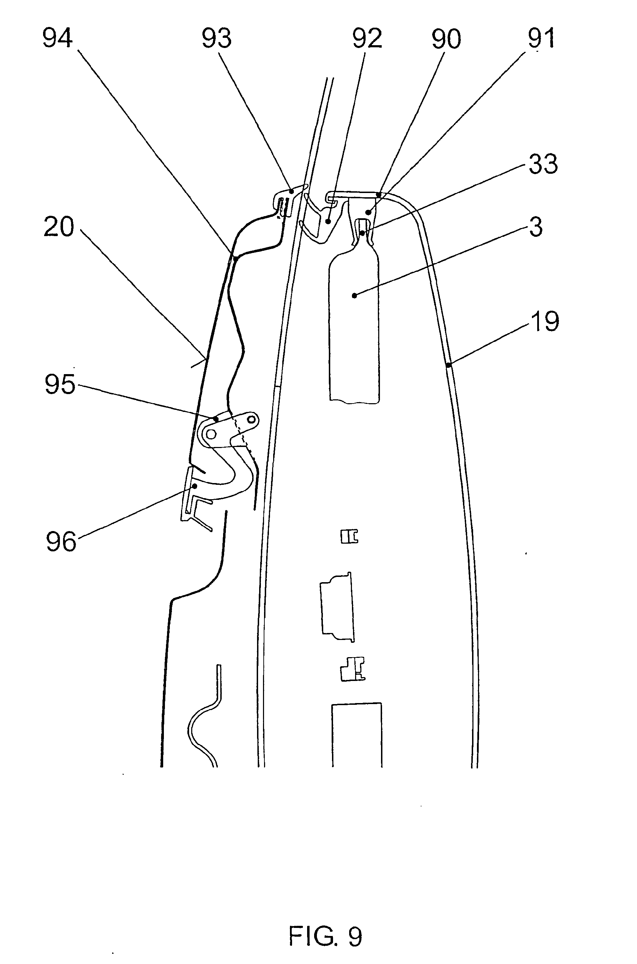

Fig. 9 ist ein vertikaler Schnitt durch die Region des oberen Randes 33 der Trägerplatte 3. Der Türinnenteil 19 ist oben nach auswärts gebogen und bildet eine horizontale Randzone 90, an der innen Steckelemente 91 vorgesehen sind, die auf den oberen Rand 33 der Trägerplatte 3 aufgesteckt werden. Weiters ist an der horizontalen Randzone 90 eine innere Fensterdichtung 92 angebracht. Eine äußere Fensterdichtung 93 ist auf den oberen Rand des Türaussenteils 20 und auf einer mit dieser verbundenen Verstärkung 94 aufgesteckt. Diese Verstärkung 94 kann weiter unten zwei Lagerlappen 95 aufweisen, an denen ein äußerer Türgriff 96 schwenkbar gelagert ist.

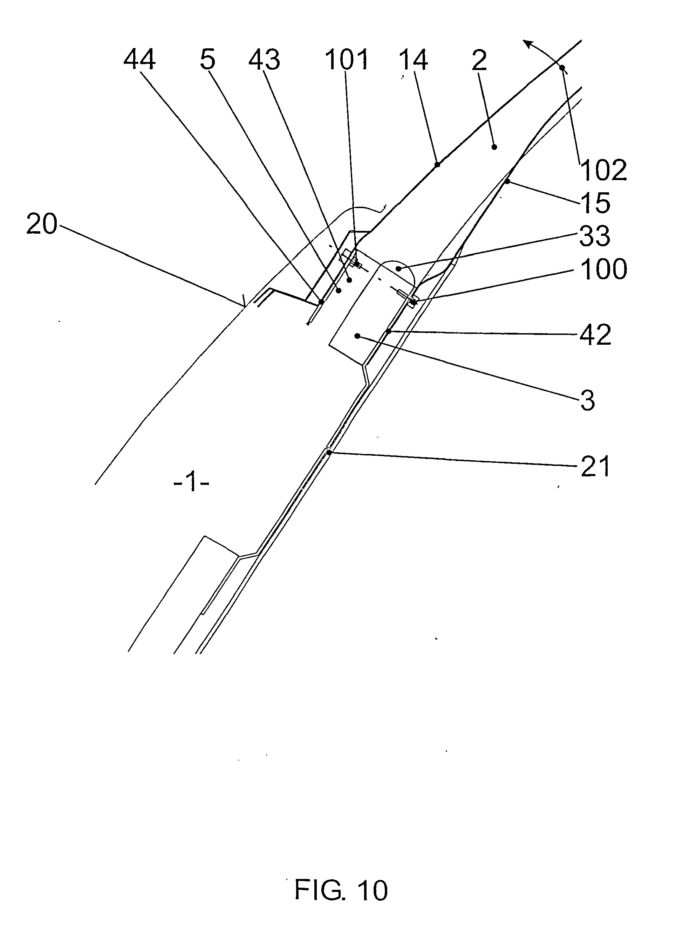

Fig. 10 ist ein vertikaler Schnitt in der Region des oberen Randes 33 der Trägerplatte 3 und zeigt die Befestigung des Fensterrahmens 2 auf der Tür. Der Fensterrahmen 2 besteht aus einem äußeren und einem inneren Fensterrahmen 14, 15, die miteinander verbunden sind und auf dem oberen Rand 33 der Trägerplatte 3 beziehungsweise des Zargenbleches 5 aufsitzen. Dessen erster Schenkel 42 und der dritter Schenkel 44 sind parallel zu- und in einigem Abstand voneinander. Der innere Fensterrahmen 15 ist mittels einer Schraube 100 (oder mehrerer) mit dem ersten Schenkel verschraubt.

Die Schraube 100 kann gleichzeitig einer der Schraubbolzen sein, mittels derer das Zargenblech 5 mit der Trägerplatte 3 verbunden ist. Der äußere Fensterrahmen 14 ist mittels Bolzen 101 mit dem dritten Schenkl 44 des Zargenbleches 5 verschraubt. Dazu können im äußeren Fensterrahmen 14 oder im dritten Schenkel 44 vertikale Langlöcher vorgesehen sein, zur Einstellung des Neigungswinkels 102 des Fensterrahmens 2 zu der Grundtür 1. Damit ist auch hier ein Toleranzausgleich geschaffen und eine maßgenaue Montage der Tür möglich. Im Falle eines rahmenlosen Fensters, wäre dieser Schnitt im wesentlichen gleich dem der Fig. 9.

## Patentansprüche

1. Kraftfahrzeugtür, bestehend aus einem Türinnenteil, einem Türaussenteil und einer Trägerplatte, welche dicht mit dem Türinnenteil verbunden ist, mit folgenden Merkmale :
a) Die Trägerplatte (3) ein Strukturteil aus einem verstärkten Kunststoff ist, sich im wesentlichen über die Fläche der Tür erstreckt und rundum einen Rand (30,31,32,33) besitzt,
b) Ein erstes (4) und ein zweites (5) Zargenblech (4,5) mit dem Rand der Trägerplatte (3) verbunden ist, welche Zargenbleche sich entlang der vertikalen Teile des Randes erstreckende gefaltete Profile sind, deren erster Schenkel (42,55) parallel zur Fläche der Tür (1) und deren zweiter Schenkel (43,56) quer zur Fläche der Tür (1) gerichtet ist, wobei der erste Schenkel (42,55) mit dem Rand (30,31) der Trägerplatte (3) verbunden ist,
c) Der Türinnenteil (19) eine Schale aus Kunststoff mit ersten Passflächen (49') ist, an denen die zweiten Schenkel (43,56) des ersten und des zweiten Zargenbleches (4,5) zumindest über einen Teil dessen Länge befestigt sind und mit einer zweiten Passfläche (83), an der die Trägerplatte (3) befestigt ist, und dass der Türinnenteil (19) die Trägerplatte (3) nach aussen überragende Schalenteile (49) und einen Anschlussflansch (50,63) bildet,
d) Der Türaussenteil (20) eine an dem Anschlussflansch (50,63) mittels formschlüssiger Befestigungsmittel (59) befestigte Haut ist.

2. Kraftfahrzeugtür nach Anspruch 1, **dadurch gekennzeichnet, dass** das erste Zargenblech (4) mit Scharnieren (6,7) und das zweite Zargenblech (5) mit einem Türschloss (9) verbunden ist.

3. Kraftfahrzeugtür nach Anspruch 1, **dadurch gekennzeichnet, dass** ein Kollisionsschutzträger (13) mit seinen Enden am ersten und am zweiten Zargenblech (4,5) ausserhalb der Trägerplatte (3) befestigt ist.

4. Kraftfahrzeugtür nach Anspruch 3, **dadurch gekennzeichnet, dass** das Profil des ersten und zweiten Zargenbleches (4,5) zumindest teilweise einen dritten Schenkel (44,57) besitzt, der ungefähr parallel zum ersten Schenkel (42,55) und ausserhalb dessen ist.

5. Kraftfahrzeugtür nach Anspruch 4, **dadurch gekennzeichnet, dass** an dem dritten Schenkel (44,57) ein Kollisionsschutzträger (13) befestigt ist.

6. Kraftfahrzeugtür nach Anspruch 5, **dadurch gekennzeichnet, dass** das erste und das zweite Zargenblech (4,5) im wesentlichen bis hin zum oberen Rand (33) der Trägerplatte (3) reichen, und dass ein getrennter Fensterrahmen (2) am oberen Rand (33) der Trägerplatte (3) aufgesetzt und am ersten (42,55) und am dritten Schenkel (45,57) des Profiles befestigt ist.

7. Kraftfahrzeugtür nach Anspruch 1, **dadurch gekennzeichnet, dass** die Trägerplatte (3) aus einer Innenwand und einer Aussenwand aus faserverstärktem Kunststoff besteht, welche Wände zumindest entlang des Randes (30, 31, 32,33) miteinander verbunden sind und zwischen den Wänden Hohlräume gebildet sind.

8. Kraftfahrzeugtür nach Anspruch 7, **dadurch gekennzeichnet, dass** die Trägerplatte (3) einen einen inneren Rand bildenden Durchbruch (40) aufweist, an welchem deren Wände miteinander verbunden sind.

9. Kraftfahrzeugtür nach Anspruch 1, **dadurch gekennzeichnet, dass** die Trägerplatte (3) integrierte metallische Einsätze (35,36,39) für Befestigungsmittel (38,45) aufweist.

10. Kraftfahrzeugtür nach Anspruch 8, **dadurch gekennzeichnet, dass** die Trägerplatte (3) an der dem Türaussenteil zugewandten Seite Fensterführungen (12) trägt.

11. Kraftfahrzeugtür nach Anspruch 1, **dadurch gekennzeichnet, dass** der Türinnenteil (19) an seiner dem Fahrzeuginneren zugekehrten Fläche Aufnahmen für die Anbringung von Einsatzteilen aufweist.

12. Kraftfahrzeugtür nach Anspruch 1, **dadurch gekennzeichnet, dass** der Türinnenteil (19) an seiner oberen Randzone (90) eine Fensterdichtung (92) und Steckelemente (91) aufweist, mit denen er auf die Trägerplatte (3) vertikal aufgesteckt ist.

13. Kraftfahrzeugtür nach Anspruch 1, **dadurch gekennzeichnet, dass** der Türinnenteil (19) eine umlaufende Gummidichtung (81) aufweist, die an der Trägerplatte (3) anliegt.

14. Kraftfahrzeugtür nach Anspruch 13, **dadurch gekennzeichnet, dass** an der Innenseite des Türinnenteiles (19) die Verkabelung vormontiert ist.

15. Kraftfahrzeugtür nach Anspruch 1, **dadurch gekennzeichnet, dass** der Türaussenteil (20) an seinen drei mit dem Türinnenteil (19) verbundenen Rändern einwärts gefaltete Zonen (51) mit Löchern aufweist, an denen die formschlüssigen Befestigungsmittel (59) durch Löcher im Anschlussflansch (50,63) hindurch angreifen.

16. Kraftfahrzeugtür nach Anspruch 14, **dadurch gekennzeichnet, dass** am Anschlussflansch (50,63) am Türinnenteil (19) eine Dichtlippe (53) vorgesehen ist, die die formschlüssigen Befestigungsmittel (59) an der dem Türaussenteil (20) abgewandten Seite des Türinnenteiles (19) überlappt.

17. Kraftfahrzeugtür nach Anspruch 14, **dadurch gekennzeichnet, dass** der Türaussenteil (20) an seinem oberen Rand eine Verstärkung (94) und eine äussere Fensterdichtung (93) aufweist.

## Claims

1. Motor vehicle door, comprising a door inside part, a door outside part and a supporting panel which is connected in a tight-fitting manner to the door inside part, with the following features:
a) the supporting panel (3) is a structural part consisting of a reinforced plastic, extends essentially over the surface of the door and has an edge (30, 31, 32, 33) all the way around,
b) a first frame plate (4) and a second frame plate (5) are connected to the edge of the supporting panel (3), said frame plates being folded profiles which extend along the vertical parts of the edge and the first limb (42, 55) of which is directed parallel to the surface of the door (1) and the second limb (43, 56) of which is directed transversely to the surface of the door (1), the first limb (42, 55) being connected to the edge (30, 31) of the supporting panel (3),
c) the door inside part (19) is a shell consisting of plastic with first fitting surfaces (49') to which the second limbs (43, 56) of the first and second frame plates (4, 5) are fastened, at least over part of its length, and with a second fitting surface (83) to which the supporting panel (3) is fastened, and wherein the door inside part (19) forms shell parts (49) protruding outward over the supporting panel (3), and a connecting flange (50, 63),
d) the door outside part (20) is a skin which is fastened to the connecting flange (50, 63) by means of positive fastening means (59).

2. The motor vehicle door as claimed in claim 1, **characterized in that** the first frame plate (4) is connected to hinges (6, 7) and the second frame plate (5) is connected to a door lock (9).

3. The motor vehicle door as claimed in claim 1, **characterized in that** a collision protection support (13) is fastened by its ends to the first and second frame plates (4, 5) outside the supporting panel (3).

4. The motor vehicle door as claimed in claim 3, **characterized in that** the profile of the first and second frame plates (4, 5) has, at least in part, a third limb (44, 57) which is approximately parallel to the first limb (42, 55) and is outside the latter.

5. The motor vehicle door as claimed in claim 4, **characterized in that** a collision protection support (13) is fastened to the third limb (44, 57).

6. The motor vehicle door as claimed in claim 5, **characterized in that** the first and second frame plates (4, 5) extend essentially as far as the upper edge (33) of the supporting panel (3), and wherein a separate window frame (2) is placed on the upper edge (33) of the supporting panel (3) and is fastened to the first limb (42, 55) and to the third limb (45, 57) of the profile.

7. The motor vehicle door as claimed in claim 1, **characterized in that** the supporting panel (3) comprises an inner wall and an outer wall consisting of fiber-reinforced plastic, which walls are connected to each other at least along the edge (30, 31, 32, 33) and cavities are formed between the walls.

8. The motor vehicle door as claimed in claim 7, **characterized in that** the supporting panel (3) has an aperture (40) which forms an inner edge and at which its walls are connected to each other.

9. The motor vehicle door as claimed in claim 1, **characterized in that** the supporting panel (3) has integrated metallic inserts (35, 36, 39) for fastening means (38, 45).

10. The motor vehicle door as claimed in claim 8, **characterized in that** the supporting panel (3) bears window guides (12) on the side facing the door outside part.

11. The motor vehicle door as claimed in claim 1, **characterized in that** the door inside part (19) has sockets on its surface facing the vehicle interior, for the attachment of insert parts.

12. The motor vehicle door as claimed in claim 1, **characterized in that** the door inside part (19) has, in its upper edge zone (90), a window seal (92) and plug-in elements (91) with which it is placed vertically onto the supporting panel (3).

13. The motor vehicle door as claimed in claim 1, **characterized in that** the door inside part (19) has a peripheral rubber seal (81) which bears against the supporting panel (3).

14. The motor vehicle door as claimed in claim 13, **characterized in that** the cabling is pre-assembled on the inside of the door inside part (19).

15. The motor vehicle door as claimed in claim 1, **characterized in that** the door outside part (20) has, on its three edges which are connected to the door inside part (19), inwardly folded zones (51) with holes in which the positive fastening means (59) engage through holes in the connecting flange (50, 63).

16. The motor vehicle door as claimed in claim 14, **characterized in that** a sealing lip (53) is provided on the connecting flange (50, 63) on the door inside part (19), said sealing lip overlapping the positive fastening means (59) on that side of the door inside part (19) which faces away from the door outside part (20).

17. The motor vehicle door as claimed in claim 14, **characterized in that** the door outside part (20) has a reinforcement (94) and an outer window seal (93) on its upper edge.

## Revendications

1. Porte de véhicule automobile composée d'une partie intérieure de porte, d'une partie extérieure de porte, et d'un panneau de support qui est relié de manière étanche à la partie intérieure de porte, présentant les caractéristiques suivantes :
a) le panneau de support (3) est un élément de structure constitué d'une matière plastique renforcée, s'étend essentiellement sur la surface de la porte, et présente sur son pourtour un bord (30, 31, 32, 33),
b) une première (4) et une deuxième (5) tôles d'encadrement (4, 5) sont reliées au bord du panneau de support (3), lesquelles tôles d'encadrement sont des profilés pliés s'étendant le long de la partie verticale du bord, profilés dont une première branche (42, 55) est orientée parallèlement à la surface de la porte (1) et dont la deuxième branche (43, 56) est orientée transversalement à la surface de la porte (1), la première branche (42, 55) étant reliée au bord (30, 31) du panneau de support (3),
c) la partie intérieure de porte (19) est une coque en matière plastique comportant des premières surfaces d'ajustement (49') sur lesquelles les deuxièmes branches (43, 56) de la première et de la deuxième tôles d'encadrement (4, 5) sont fixées au moins sur une partie de leur longueur, et comportant une deuxième surface d'ajustement (83) sur laquelle est fixé le panneau de support (3), et la partie intérieure de porte (19) forme des parties de coque (49) dépassant vers l'extérieur du panneau de support (3) et une bride de raccordement (50, 63),
d) la partie extérieure de porte (20) est une peau fixée à la bride de raccordement (50, 63) au moyen de moyens de fixation par complémentarité de formes (59).

2. Porte de véhicule automobile selon la revendication 1, **caractérisée en ce que** la première tôle d'encadrement (4) est reliée par des charnières (6, 7), et la deuxième tôle d'encadrement (5) par une serrure de porte (9).

3. Porte de véhicule automobile selon la revendication 1, **caractérisée en ce qu'**un support anti-collision (13) est fixé par ses extrémités à la première et à la deuxième tôles d'encadrement (4, 5), à l'extérieur du panneau de support (3).

4. Porte de véhicule automobile selon la revendication 3, **caractérisée en ce que** le profilé de la première et de la deuxième tôles d'encadrement (4, 5) présente au moins partiellement une troisième branche (44, 57) qui est sensiblement parallèle à la première branche (42, 55) et agencée à l'extérieur de cette dernière.

5. Porte de véhicule automobile selon la revendication 4, **caractérisée en ce qu'**un support anti-collision (13) est fixé à la troisième branche (44, 57).

6. Porte de véhicule automobile selon la revendication 5, **caractérisée en ce que** la première et la deuxième tôles d'encadrement (4, 5) s'étendent sensiblement jusqu'au bord supérieur (33) du panneau de support (3), et **en ce qu'**un encadrement de vitre séparé (2) est disposé sur le bord (33) du panneau de support (3) et disposé à la première (42, 55) et à la troisième (44, 57) branches du profilé.

7. Porte de véhicule automobile selon la revendication 1, **caractérisée en ce que** le panneau de support (3) est constitué d'une paroi intérieure et d'une paroi extérieure en matière plastique renforcée de fibres, lesquelles parois sont reliées l'une à l'autre au moins le long du bord (30, 31, 32, 33), et des espaces vides étant formés entre les parois.

8. Porte de véhicule automobile selon la revendication 7, **caractérisée en ce que** le panneau de support (3) présente une ouverture (40) formant un bord intérieur au niveau duquel ses parois sont reliées l'une à l'autre.

9. Porte de véhicule automobile selon la revendication 1, **caractérisée en ce que** le panneau de support (3) présente des inserts métalliques intégrés (35, 36, 39) pour des moyens de fixation (38, 45).

10. Porte de véhicule automobile selon la revendication 8, **caractérisée en ce que** le panneau de support (3) porte des guides de vitre (12) sur la face tournée vers la partie extérieure de porte.

11. Porte de véhicule automobile selon la revendication 1, **caractérisée en ce que** la partie intérieure de porte (19) présente, sur la surface tournée vers l'habitacle du véhicule, des logements pour le montage d'inserts.

12. Porte de véhicule automobile selon la revendication 1, **caractérisée en ce que** la partie intérieure de porte (19) présente, sur sa zone supérieure de bordure (90), un joint de vitre (92) et des éléments de montage (91) au moyen desquels elle est montée en place verticalement sur le panneau de support (3).

13. Porte de véhicule automobile selon la revendication 1, **caractérisée en ce que** la partie intérieure de porte (19) présente un joint d'étanchéité périphérique (81) qui repose sur le panneau de support (3).

14. Porte de véhicule automobile selon la revendication 13, **caractérisée en ce que** le câblage est prémonté au niveau de la face intérieure de la partie intérieure de porte (19).

15. Porte de véhicule automobile selon la revendication 1, **caractérisée en ce que** la partie extérieure de porte (20) présente, sur ses trois bords reliés à la partie intérieure de porte (19), des zones repliées vers l'intérieur (51) comportant des trous dans lesquels les moyens de fixation par complémentarité de formes (59) s'engagent en traversant des trous associés prévus dans la bride de raccordement (50, 63).

16. Porte de véhicule automobile selon la revendication 14, **caractérisée en ce que** sur la bride de raccordement (50, 63) à la partie intérieure de porte (19) est prévu un joint à lèvre (53) qui recouvre les moyens de fixation par complémentarité de formes (59) au niveau de la face de la partie intérieure de porte (19)qui est opposée à la partie extérieure de porte (20).

17. Porte de véhicule automobile selon la revendication 14, **caractérisée en ce que** la partie extérieure de porte (20) présente, sur son bord supérieur, un renfort (94) et un joint de vitre extérieur (93).
